# EUROPEAN PATENT SPECIFICATION

(11) **EP 1 900 267 B1**
(45) Date of publication and mention of the grant of the patent: **07.04.2010**
(21) Application number: 06120499.6
(22) Date of filing: 12.09.2006
(51) Int. Cl.: A01B 1/22, B25G 3/26

(54) **Detachable handle mounting structure**
Lösbare Stielbefestigung
Construction à poignée amovible

(43) Date of publication of application: 19.03.2008
(73) Proprietor: Natura Innovation Ltd., Port Louis (MU)
(72) Inventor: Hua, Shan Su, Jhongshan District Taipei City 104 (TW)
(74) Representative: Viering, Jentschura & Partner

(56) References cited:
- DE-U1- 20 207 640
- FR-A1- 2 348 795
- US-A- 4 606 089
- US-A1- 2002 158 425
- US-B1- 6 219 883
- US-B1- 6 598 266

## Description

### BACKGROUND OF THE INVENTION

### 1. Field of the Invention:

The invention relates to a detachable handle mounting structure according to the preamble of claim 1. Accordingly, the present invention relates to garden tools and more particularly, to a detachable handle mounting structure for garden tool that detachably connects a handle to a tool. The handle can be made in the form of a long shaft for the holding of the both hands, or a short grip for the holding of one single hand.

### 2. Description of the Related Art:

A mounting structure of the initially-mentioned type is known, for example, from US 2002/158425 A1.

Draw hoe, pruning saw, trowel, and other garden tools may be selectively used for cultivation of the soil. These garden tools commonly have a fixed handle. It is inconvenient to carry a set of garden tools. Further, because conventional garden tools do not have a detachable handle, they require a big amount of packing materials and occupy much space during delivery. Further, the supplier or distributor must provide a big place to display or store garden tools.

### SUMMARY OF THE INVENTION

The present invention has been accomplished under the circumstances in view. It is one object of the present invention to provide a detachable handle mounting structure, which enables the handle to be detachably connected to any of a variety of tools. It is another object of the present invention to provide a detachable handle mounting structure, which locks the handle to be locked or unlocked by means of rotary motion within 90°. It is another object of the present invention to provide a detachable handle mounting structure, which enables the user to accurately and easily attach the handle to any of a variety of tools.

To achieve these and other objects of the present invention, the invention provides a detachable handle mounting structure according to claim 1. Further embodiments of the invention are described in the dependent claims.

### BRIEF DESCRIPTION OF THE DRAWINGS

FIG. 1 is an exploded view of a detachable handle mounting structure according to the present invention (the connecting bar and the tool excluded).
FIG. 2 corresponds to FIG. 1, showing the retaining ring, the plug and the rotary knob turned upside down.
FIG. 3 corresponds to FIG. 2, showing the retaining ring fastened to the rotary knob and the plug fastened to the socket.
FIG. 4 shows the detachable handle mounting structure assembled before connection to the connecting bar at the tool.
FIG. 5 is an assembly view of FIG. 4.
FIG. 6 is a sectional view of the present invention, showing the plug kept in the unlocking position.
FIG. 7 is a sectional view taken along line 7-7 of FIG. 6
FIG. 8 corresponds to FIG. 6, showing the plug moved to the locking position.
FIG. 9 is a sectional view taken along line 9-9 of FIG. 8.

### DETAILED DESCRIPTION OF THE PREFERRED EMBODIMENT

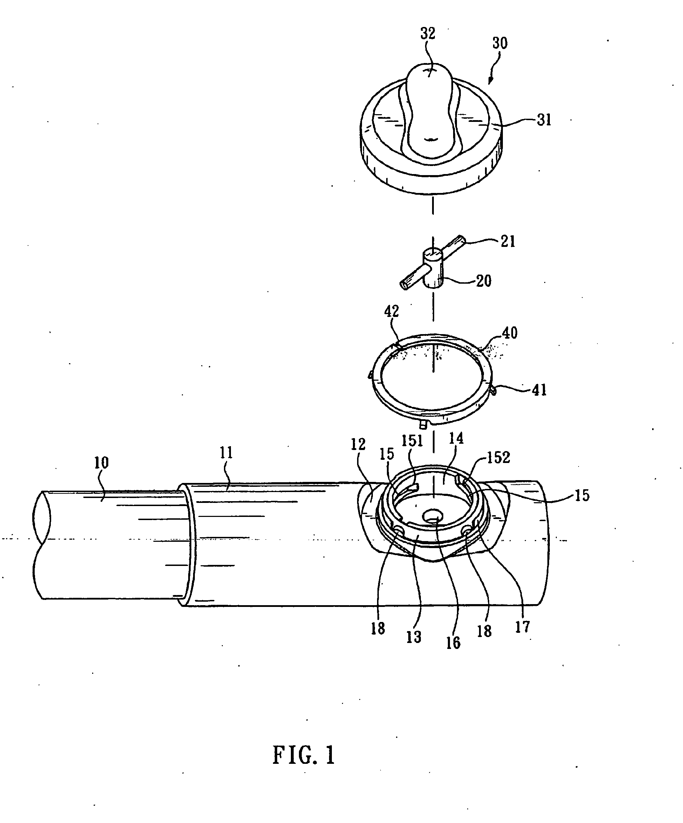

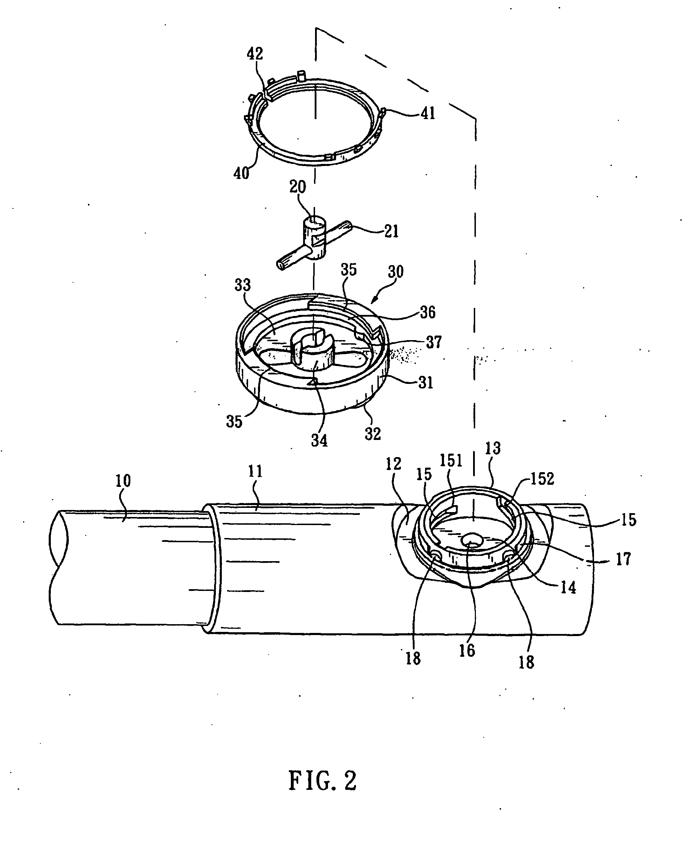

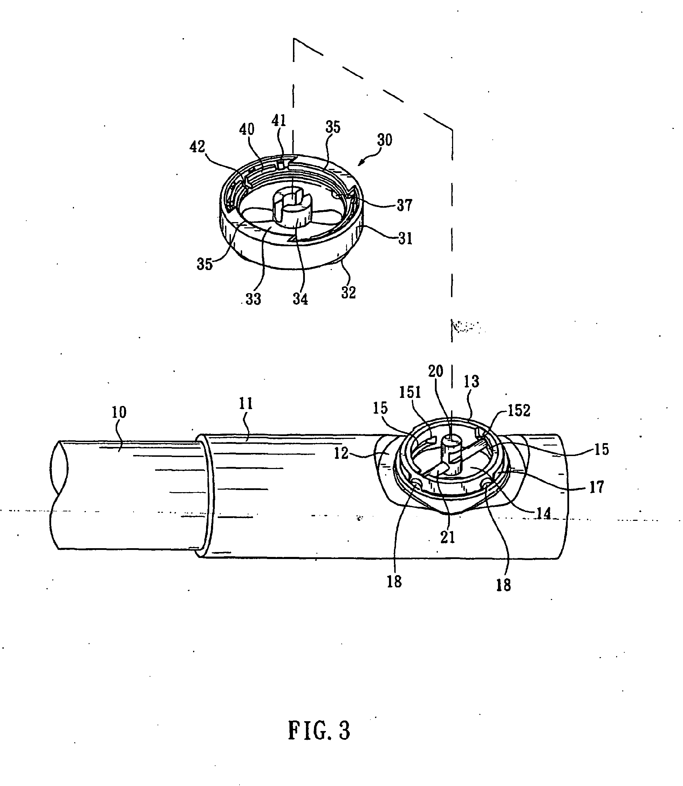

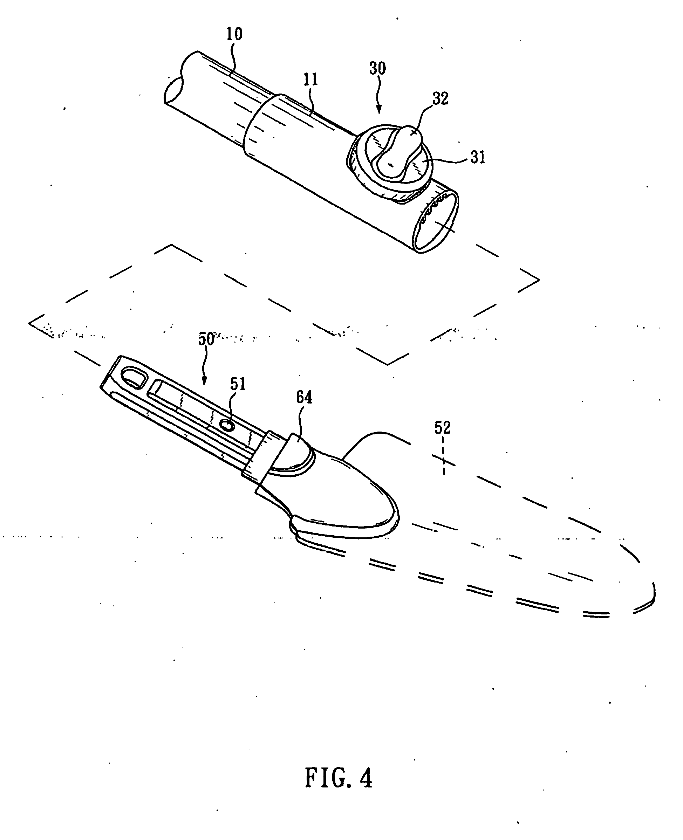

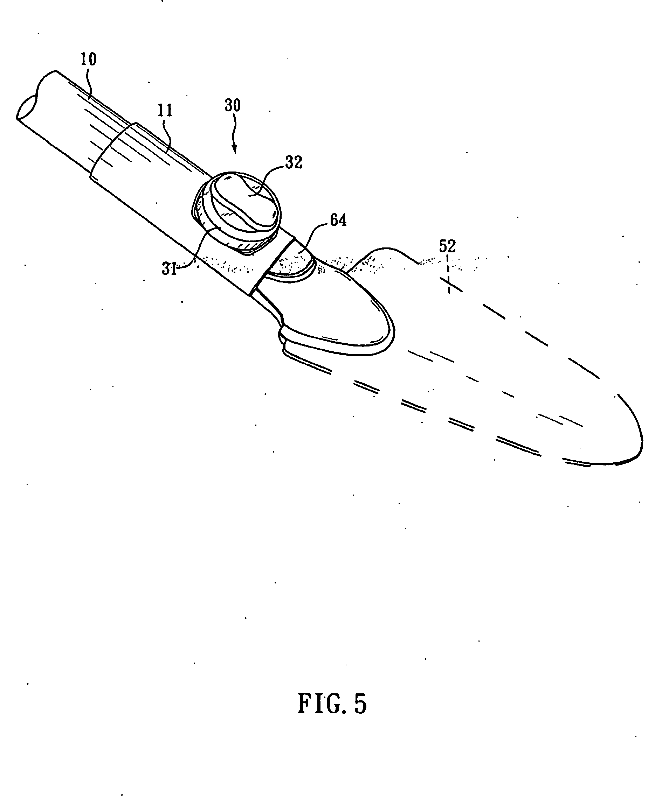

Referring to FIGS. 1~5, a detachable handle mounting structure in accordance with the present invention is generally comprised of a metal handle **10,** a socket **13,** a plug **20,** a rotary knob **30,** a retaining ring **40,** and a connecting bar **50.**

The metal handle **10** has a plastic sleeve **11** fixedly provided at one end thereof. The plastic sleeve **11** has a recessed portion **12** on the periphery.

The socket **13** is an annular member fixedly provided at the recessed portion **12** of the plastic sleeve **11,** having an accommodation open chamber **14** and two spiral guide grooves **15** formed on the inside wall thereof within the accommodation open chamber **14** and spaced from each other at 180°. Each spiral guide groove **15** has a lower end **151** and an upper end **152.** The socket **13** further has a bottom center hole **16,** which extends through the peripheral wall of the plastic sleeve 11, a locating groove **17** on the outside wall, and two recesses **18** on the top edge corresponding to the lower end **151** of one spiral guide groove **15** and the upper end **152** of the other spiral guide groove **15.**

The plug **20** is mounted in the bottom center hole **16** inside the accommodation open chamber **14** of the socket **13,** having a cross rod **21.** The cross rod **21** has the two distal ends thereof respectively inserted into the spiral guide grooves **15.** The cross rod **21** can be rotated and moved along the spiral guide grooves **15** between the respective lower ends **151** and the respective upper ends **152.** When the ends of the cross rod **21** are moved toward the respective lower ends **151** of the spiral guide grooves **15,** the plug **20** is lowered toward the inside of the plastic sleeve **11.** On the contrary, when the ends of the cross rod **21** are moved away from the respective lower ends **151** of the spiral guide grooves **15** toward the respective upper ends **152,** the plug **20** is moved in the reversed direction toward the outside of the plastic sleeve **11.**

The rotary knob **30** is adapted to move the plug **20,** having a knob body **31** and a finger block **32.** The finger block **32** is fixedly provided at the top side of the knob body **31.** The knob body **31** is coupled to the socket **13** at the recessed portion **12** of the plastic sleeve **11.** Through the finger block **32,** the user can rotate the rotary knob **30** to the desired angle conveniently with the fingers. The knob body **31** has an open chamber **33,** a coupling member **34** suspending in the open chamber **33** at the center and coupled to the plug **20** and the cross rod **21,** two stop flanges **35** protruded from the inside wall within the open chamber **33** and spaced from each other at 180°, an inside annular groove **36** defined between the stop flanges **35** and the bottom wall of the open chamber **33,** and two locating blocks **37** protruded from the inside wall and suspending in the open chamber **33.** When the rotary knob **30** is rotated clockwise or counter-clockwise through 90°, one locating block **37** is engaged into one recess **18.**

The retaining ring **40** is a split ring set in the inside annular groove **36** of the rotary knob **30,** having an opening **42** and a plurality of springy radial teeth **41** respectively stopped at the ends of the stop flanges **35** to prohibit rotation of the retaining ring **40** relative to the rotary knob **30** and to have the retaining ring **40** be rotated with the rotary knob **30.** When the coupling member **34** of the rotary knob **30** is coupled to the plug **20** and the cross rod **21,** the retaining ring **40** is forced by the socket **13** to expand and to move over the outside wall of the socket **13** toward the locating groove **17.** When reached the locating groove **17,** the retaining ring **40** returns to its former shape and engaged into the locating groove **17,** thereby securing the rotary knob **30** to the socket **13** and allowing rotation of the rotary knob **30** relative to the socket **13.**

The connecting bar **50** is formed integral with one side of a tool **50** and inserted into the plastic sleeve **11,** having a plug hole **51** for receiving the plug **20** and a stop block **64** stopped against the free end of the plastic sleeve **11.**

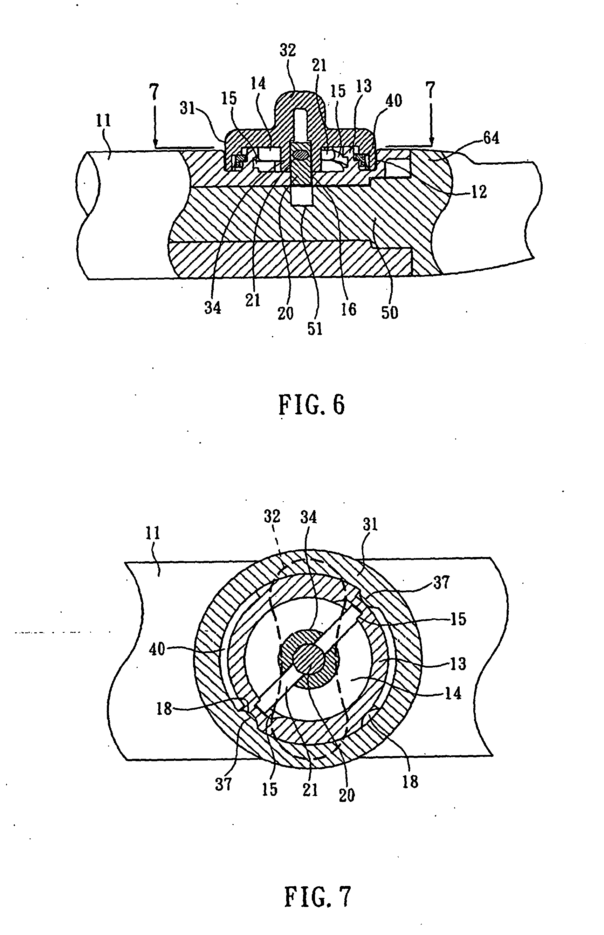

Referring to FIGS. 6 and 7, when rotated the rotary knob **30** to the position where the ends of the cross rod **21** are respectively stopped at the respective upper ends **152,** the plug **20** is kept away from the plug hole **51** of the connecting bar **50,** and therefore the connecting bar **50** is unlocked and can be moved with the tool **50** away from the plastic sleeve **11.** At this time, one locating block **37** is kept engaged in one recess **18,** holding the rotary knob **30** in the unlocking position.

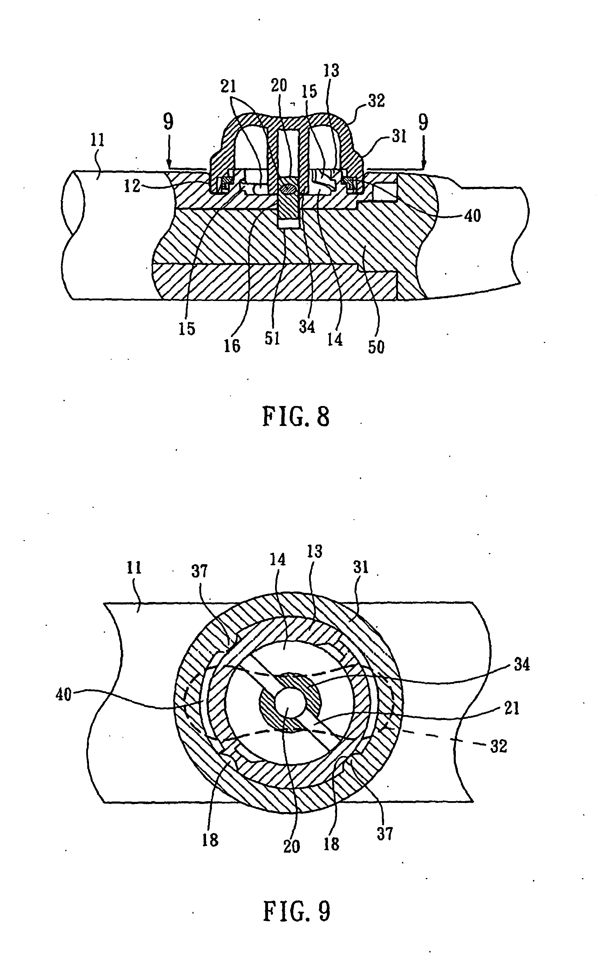

Referring to FIGS. 8 and 9, when rotated the rotary knob **30** to the position where the ends of the cross rod **21** are respectively stopped at the respective lower ends **151,** the plug **20** is engaged into the plug hole **51** of the connecting bar **50** to lock the connecting bar **50** to the plastic sleeve **11.** At this time, one locating block **37** is kept engaged in the other recess **18,** holding the rotary knob **30** in the locking position.

A prototype of detachable handle mounting structure has been constructed with the features of FIGS. 1~9. The detachable handle mounting structure functions smoothly to provide all of the features disclosed earlier.

Although a particular embodiment of the invention has been described in detail for purposes of illustration, various modifications and enhancements may be made without departing from the scope of the invention. Accordingly, the invention is not to be limited except as by the appended claims.

## Claims

1. A detachable handle mounting structure comprising:
a handle (10);
a sleeve (11) fixedly connected to one end of said handle (10) for receiving a tool, a socket (13) fixedly provided on said sleeve (11) , said socket (13) having an accommodation open chamber (14) and a bottom center hole (16) cut through the periphery wall of said sleeve (11) at the center of said accommodation open chamber (14);
a plug (20) partially inserted into the bottom center hole (16) of said socket (13) and vertically movable in the bottom center hole (16) of said socket (13) between a locking position where said plug (20) is partially projecting into the inside of said sleeve (11) to lock a tool to said sleeve (11) and an unlocking position where said plug (20) is moved away from the inside of said sleeve to unlock the tool that is inverted into said sleeve (11); and
a rotary knob (30), said rotary knob (30) comprising a knob body (31) coupled to said socket (13) and rotatable relative to said socket (13) to move said plug (20) vertically in the bottom center hole (16) of said socket (13) between said locking position and said unlocking position, said knob body (31) having an open chamber (33), **characterized by** a coupling member (34) suspending in the open chamber (33) of said knob body (31) and coupled to said plug (20), said sleeve (11) having a recessed portion (12) on the periphery thereof, in which recessed portion (12) the socket (13) is provided,
wherein said socket (13) has at least one spiral guide groove (15), said at least one spiral guide groove (15) each having a lower end (151) and an upper end (152); said plug (20) has a guide rod (21) movable along said at least one spiral guide groove (15) between the lower end (151) and upper end (152) of each of said at least one spiral guide groove (15).

2. The detachable handle mounting structure as claimed in claim 1, wherein said socket (13) has two spiral guide grooves (15) formed on an inside wall thereof and spaced from each other at 180°, said spiral guide grooves (15) each having a lower end (151) and an upper end (152); said guide rod (21) being a cross rod, said cross rod having two distal ends respectively inserted into said spiral guide grooves (15), said cross rod being moved along said spiral guide grooves (15) between the lower end (151) and upper end (152) of each of said spiral guide grooves (15) to move said plug (20) axially in said bottom center hole (16) of said socket (13) during a rotary motion of said rotary knob (30).

3. The detachable handle mounting structure as claimed in claim 1, wherein said rotary knob (30) has a finger block (32) fixedly provided at a top side of said knob body (31).

4. The detachable handle mounting structure as claimed in claim 3, wherein said knob body (31) of said rotary knob (30) has an inside annular groove (36), wherein said socket (13) has a locating groove (17) on the periphery thereof, wherein a retraining ring (40) is internally engaged into the locating groove (17) of said socket (13) and externally engaged into the inside annular groove (36) of said knob body (31) of said rotary knob (30).

5. The detachable handle mounting structure as claimed in claim 4, wherein said retaining ring (40) is a split ring having an opening.

6. The detachable handle mounting structure as claimed in claim 4, wherein said retaining ring (40) has a plurality of springy radial teeth respectively stopped against said knob body (31).

7. The detachable handle mounting structure as claimed in claim 1, wherein said socket (13) has at least one recess (18) on an outside wall thereof; said knob body (31) of said rotary knob (30) has at least one inside locating block (37) for engaging said at least one recess (18) of said socket (13).

8. The detachable handle mounting structure as claimed in claim 1, wherein said socket (13) has two recesses (18) on an outside wall thereof; said knob body (31) of said rotary knob (30) has two inside locating blocks (37), wherein one of said locating blocks (37) is engaged into one of said two recesses (18) when said rotary knob (30) is rotated relative to said socket (13) in one of two reversed directions to a predetermined angle.

## Patentansprüche

1. Lösbare Stielbefestigungsstruktur, aufweisend:
einen Stiel (10);
eine Hülse (11), die mit dem einen Ende des Stiels (10) zum Aufnehmen eines Werkzeugs fest verbunden ist;
eine Buchse (13), die an der Hülse (11) fest vorgesehen ist, wobei die Buchse (13) eine offene Aufnahmekammer (14) und eine mittige Bodenöffnung (16) aufweist, die in der Mitte der offenen Aufnahmekammer (14) durch die Umfangswand der Hülse (11) hindurch geschnitten ist;
einen Stecker (20), der teilweise in die mittige Bodenöffnung (16) der Buchse (13) eingesetzt ist und in der mittigen Bodenöffnung (16) der Buchse (13) zwischen einer Verriegelungsposition, wo der Stecker (20) teilweise in die Innenseite der Hülse (11) hineinragt, um ein Werkzeug mit der Hülse (11) zu verriegeln, und einer Entriegelungsposition, wo der Stecker (20) von der Innenseite der Hülse weg bewegt ist, um das Werkzeug, das in die Hülse (11) eingesetzt ist, zu entriegeln, vertikal bewegbar ist; und
einen Drehknopf (30), wobei der Drehknopf (30) einen Knopfkörper (31) aufweist, der mit der Buchse (13) gekuppelt und relativ zu der Buchse (13) drehbar ist, um den Stecker (20) vertikal in der mittigen Bodenöffnung (16) der Buchse (13) zwischen der Verriegelungsposition und der Entriegelungsposition zu bewegen, wobei der Knopfkörper (31) eine offene Kammer (33) aufweist,
**gekennzeichnet durch** ein Kupplungselement (34), das in der offenen Kammer (33) des Knopfkörpers (31) hängt und mit dem Stecker (20) gekuppelt ist, wobei die Hülse (11) an ihrem Umfang einen ausgesparten Abschnitt (12) aufweist, in welchem ausgesparten Abschnitt (12) die Buchse (13) vorgesehen ist, wobei die Buchse (13) wenigstens eine Spiralführungsnut (15) aufweist, wobei die wenigstens eine Spiralführungsnut (15) jeweils ein unteres Ende (151) und ein oberes Ende (152) aufweist, wobei der Stecker (20) eine Führungsstange (21) aufweist, die entlang der wenigstens einen Spiralführungsnut (15) zwischen dem unteren Ende (151) und dem oberen Ende (152) jeder der wenigstens einen Spiralführungsnut (15) bewegbar ist.

2. Lösbare Stielbefestigungsstruktur nach Anspruch 1, wobei die Buchse (13) zwei Spiralführungsnuten (15) aufweist, die an ihrer Innenwand ausgebildet und im Abstand von 180° voneinander angeordnet sind, wobei die Spiralführungsnuten (15) jeweils ein unteres Ende (151) und ein oberes Ende (152) aufweisen, wobei die Führungsstange (21) eine Querstange ist, wobei die Querstange zwei distale Enden aufweist, die in die jeweiligen Spiralführungsnuten (15) eingesetzt sind, wobei die Querstange entlang den Spiralführungsnuten (15) zwischen dem unteren Ende (151) und dem oberen Ende (152) jeder der Spiralführungsnuten (15) bewegt wird, um den Stecker (20) während einer Drehbewegung des Drehknopfes (30) axial in der mittigen Bodenöffnung (16) der Buchse (13) zu bewegen.

3. Lösbare Stielbefestigungsstruktur nach Anspruch 1, wobei der Drehknopf (30) einen Fingerblock (32) aufweist, der an einer Oberseite des Knopfkörpers (31) fest vorgesehen ist.

4. Lösbare Stielbefestigungsstruktur nach Anspruch 3, wobei der Knopfkörper (31) des Drehknopfes (30) eine innere Ringnut (36) aufweist, wobei die Buchse (13) an ihrem Umfang eine Aufnahmenut (17) aufweist, wobei ein Haltering (40) innen in die Aufnahmenut (17) der Buchse (13) eingreift und außen in die innere Ringnut (36) des Knopfkörpers (31) des Drehknopfes (30) eingreift.

5. Lösbare Stielbefestigungsstruktur nach Anspruch 4, wobei der Haltering (40) ein Spaltring mit einer Öffnung ist.

6. Lösbare Stielbefestigungsstruktur nach Anspruch 4, wobei der Haltering (40) eine Mehrzahl von federnden radialen Zähnen aufweist, die jeweils an dem Knopfkörper (31) gestoppt werden.

7. Lösbare Stielbefestigungsstruktur nach Anspruch 1, wobei die Buchse (13) an ihrer Außenwand wenigstens eine Ausnehmung (18) aufweist, wobei der Knopfkörper (31) des Drehknopfes (30) wenigstens einen inneren Fixierblock (37) für den Eingriff mit der wengistens einen Ausnehmung (18) der Buchse (13) aufweist.

8. Lösbare Stielbefestigungsstruktur nach Anspruch 1, wobei die Buchse (13) an ihrer Außenwand zwei Ausnehmungen (18) aufweist, wobei der Knopfkörper (31) des Drehknopfes (30) zwei innere Fixierblöcke (37) aufweist, wobei einer der Fixierblöcke (37) in eine der beiden Ausnehmungen (18) eingreift, wenn der Drehknopf (30) relativ zu der Buchse (13) in einer von zwei umgekehrten Richtungen in einem vorbestimmten Winkel gedreht wird.

## Revendications

1. Structure de montage de manche démontable comprenant :
- un manche (10) ;
- un manchon (11) relié de manière fixe à une extrémité dudit manche (10) pour recevoir un outil, une douille (13) disposée de manière fixe sur ledit manchon (11), ladite douille (13) ayant une chambre ouverte de réception (14) et un trou central de fond (16) découpé à travers la paroi périphérique dudit manchon (11) au centre de ladite chambre ouverte de réception (14) ;
- une fiche (20) partiellement introduite dans le trou central de fond (16) de ladite douille (13) et mobile verticalement dans le trou central de fond (16) de ladite douille (13) entre une position de verrouillage dans laquelle ladite fiche (20) se projette partiellement dans l'intérieur dudit manchon (11) pour verrouiller un outil audit manchon (11) et une position de déverrouillage dans laquelle ladite fiche (20) est déplacée à l'opposé de l'intérieur dudit manchon pour déverrouiller l'outil qui est introduit dans ledit manchon (11) ; et
- un bouton rotatif (30), ledit bouton rotatif (30) comprenant un corps de bouton (31) couplé à ladite douille (13) et apte à tourner par rapport à ladite douille (13) pour déplacer ladite fiche (20) verticalement dans le trou central de fond (16) de ladite douille (13) entre ladite position de verrouillage et ladite position de déverrouillage, ledit corps de bouton (31) ayant une chambre ouverte (33), **caractérisée par** un élément d'accouplement (34) suspendu dans la chambre ouverte (33) dudit corps de bouton (31) et couplé à ladite fiche (20), ledit manchon (11) ayant une partie en cavité (12) sur la périphérie de celui-ci, dans laquelle partie en cavité (12) est disposée la douille (13), ladite douille (13) ayant au moins une rainure de guidage en spirale (15), ladite ou lesdites rainures de guidage en spirale (15) ayant chacune une extrémité inférieure (151) et une extrémité supérieure (152) ; ladite fiche (20) ayant une tige de guidage (21) mobile le long de ladite ou desdites rainures de guidage en spirale (15) entre l'extrémité inférieure (151) et l'extrémité supérieure (152) de ladite ou de chacune desdites rainures de guidage en spirale (15).

2. Structure de montage de manche démontable selon la revendication 1, dans laquelle ladite douille (13) a deux rainures de guidage en spirale (15) formées sur une paroi interne de celle-ci et espacées l'une de l'autre à 180°, lesdites rainures de guidage en spirale (15) ayant chacune une extrémité inférieure (151) et une extrémité supérieure (152) ; ladite tige de guidage (21) étant une tige transversale, ladite tige transversale ayant deux extrémités distales respectivement introduites dans lesdites rainures de guidage en spirale (15), ladite tige transversale étant amenée à se déplacer le long desdites rainures de guidage en spirale (15) entre l'extrémité inférieure (151) et l'extrémité supérieure (152) de chacune desdites rainures de guidage en spirale (15) pour déplacer ladite fiche (20) axialement dans ledit trou central de fond (16) de ladite douille (13) lors d'un mouvement de rotation dudit bouton rotatif (30).

3. Structure de montage de manche démontable selon la revendication 1, dans laquelle ledit bouton rotatif (30) a un bloc à doigt (32) disposé de manière fixe sur un côté supérieur dudit corps de bouton (31).

4. Structure de montage de manche démontable selon la revendication 3, dans laquelle ledit corps de bouton (31) dudit bouton rotatif (30) a une rainure annulaire interne (36), ladite douille (13) ayant une rainure de positionnement (17) sur la périphérie de celle-ci, une bague de retenue (40) étant en prise sur l'intérieur dans la rainure de positionnement (17) de ladite douille (13) et étant en prise sur l'extérieur dans la rainure annulaire interne (36) dudit corps de bouton (31) dudit bouton rotatif (30).

5. Structure de montage de manche démontable selon la revendication 4, dans laquelle ladite bague de retenue (40) est une bague fendue ayant une ouverture.

6. Structure de montage de manche démontable selon la revendication 4, dans laquelle ladite bague de retenue (40) a une pluralité de dents radiales élastiques respectivement arrêtées contre ledit corps de bouton (31).

7. Structure de montage de manche démontable selon la revendication 1, dans laquelle ladite douille (13) a au moins une cavité (18) sur une paroi externe de celle-ci ; ledit corps de bouton (31) dudit bouton rotatif (30) a au moins un bloc de positionnement interne (37) destiné à venir en prise avec ladite ou lesdites cavités (18) de ladite douille (13).

8. Structure de montage de manche démontable selon la revendication 1, dans laquelle ladite douille (13) a deux cavités (18) sur une paroi externe de celle-ci ; ledit corps de bouton (31) dudit bouton rotatif (30) a deux blocs de positionnement internes (37), l'un desdits blocs de positionnement (37) étant en prise dans l'une desdites deux cavités (18) lorsque ledit bouton rotatif (30) est amené à tourner par rapport à ladite douille (13) dans l'un des deux sens inverses à un angle prédéterminé.
